# EUROPEAN PATENT SPECIFICATION

(11) **EP 3 872 331 B1**
(45) Date of publication and mention of the grant of the patent: **13.12.2023**
(21) Application number: 21159312.4
(22) Date of filing: 25.02.2021
(51) Int. Cl.: F02M 57/02

(54) **FUEL VALVE WITH A PUMP WITH IMPROVED SEALING PROPERTIES**
KRAFTSTOFFVENTIL MIT EINER PUMPE MIT VERBESSERTEN DICHTUNGSEIGENSCHAFTEN
SOUPAPE À CARBURANT AVEC UNE POMPE PRÉSENTANT DES PROPRIÉTÉS D'ÉTANCHÉITÉ AMÉLIORÉES

(30) Priority: 26.02.2020 DK PA202070126
(43) Date of publication of application: 01.09.2021
(60) Divisional application: 22165009.6
(73) Proprietor: MAN Energy Solutions, filial af MAN Energy Solutions SE, Tyskland, 2450 Copenhagen SV (DK)
(72) Inventor: Hagen, Peter, DK-2791 Dragoer (DK)
(74) Representative: Nordic Patent Service A/S

(56) References cited:
- WO-A1-2013/086427
- WO-A1-2013/118298
- US-A1- 2019 003 406

## Description

### TECHNICAL FIELD

The disclosure relates to a fuel valve with a pump for pumping fuel to the nozzle of the fuel valve, the fuel valve being suitable for use in a large two-stroke internal combustion engine, in particular, fuel valve with a fuel pump that acts as a pressure booster.

### BACKGROUND

In recent years there has been a development towards alternative fuels for large two-stroke internal combustion engines. Conventionally, these engines were operated with fuel oil or heavy fuel oil. However, emission requirements have motivated a drive towards alternative fuels that produce fewer emissions. Some of these alternative fuels, such as e.g. natural gas are gaseous under ambient conditions and are highly flammable (low flashpoint), and risk forming explosive mixtures with air.

Fuel pumps for pumping gaseous fuel, such as e.g. liquid petroleum gas (LPG) or liquid natural gas (LNG) may not leak any fuel to the environment or to the liquids of the other systems of the engine such as the lubrication system or the cooling system, since the volatile and explosive nature of these alternative fuels creates a risk of explosion. Thus, if such alternative fuel leaks into e.g. the cooling system, all the liquid in the cooling system will have to be exchanged, during the fuel leak into an expensive operation.

Fuel pumps typically comprise a reciprocating pump plunger slidably received with a clearance in a bore. The pump plunger reciprocates between a retracted position and an extended position and makes a pump stroke from the retracted position to the extended position and an aspiration stroke from the extended position to the retracted position. A pump chamber is provided in the bore on one side of the pump plunger. The pump chamber is typically connected via a first one-way valve to a supply of fuel and via a second one-way valve to one or more fuel valves. The first one-way valve allows the aspiration of fuel from the supply of fuel to the pump chamber and the second one-way valve allows the fuel to be evacuated from the pump chamber to the fuel valves.

Pressurized sealing liquid is pumped into the clearance to prevent fuel from entering the clearance and fuel eventually ending up on the other side of the pump plunger. To ensure that no fuel leaks to the other side of the plunger, it is advantageous to ensure that the pressure of the sealing liquid in the clearance is higher than the pressure of the fuel in the pump chamber. However, the pressure in the fuel chamber fluctuates from a low level that corresponds during an aspiration stroke roughly to the pressure at which the fuel is supplied to the fuel pump to a high level that corresponds to the output pressure of the pump during a pump stroke. The supply pressure of the sealing liquid can be selected to be higher than the highest pressure of the fuel in the pump chamber during the pump stroke to ensure that no fuel enters the clearance. However, this will cause a steady flow of sealing liquid into the pump chamber since the pressure in the clearance is always higher than the pressure in the pump chamber, and during the aspiration stroke significantly higher. It is also known to supply the sealing liquid with a pressure that is somewhere between the lowest pressure in the pump chamber and the highest pressure in the pump chamber, and to ensure that the axial length of the clearance and the axial distance between the position where the sealing liquid is supplied to the clearance and position at which the clearance opens into the pump chamber is sufficient to absorb temporary inflow of fuel into the clearance. Thus, during a pump stroke fuel will enter the clearance since the sealing liquid pressure is lower than the fuel pressure during the pump stroke and this fuel that entered the clearance during the pump stroke will then be expelled from the clearance during an aspiration stroke, since the sealing liquid pressure is higher than the fuel pressure during an aspiration stroke. However, in order to be on the safe side the pressure at which the sealing liquid is supplied as to be chosen such that more sealing liquid than fuel enters the clearance, and thus, there will still be a significant amount of sealing liquid ending up in the fuel thereby contaminating of the fuel with sealing liquid. Since the sealing liquid typically is a mineral oil, it will increase emission levels when it contaminates the alternative fuel.

US2019003406 discloses a large two-stroke turbocharged compression-ignited internal combustion crosshead engine with a plurality of cylinders has at least one pressure booster for each cylinder for boosting fuel pressure, two or more electronically controlled fuel valves for each cylinder with an inlet of the two or more electronically controlled fuel valves being connected to an outlet of the at least one pressure booster. An electronic control unit is connected to the at least one pressure booster and the two or more electronically controlled fuel valves. The electronic control unit is configured to determine a start time for a fuel injection event, activate the at least one pressure booster ahead of the determined start time and to open the two or more electronically controlled fuel valves at the determined start time.

WO2013118298 discloses a fuel pump fuel pump for umping fuel oil via a supply line to a fuel valve. The fule pump comprises a hydraulically driven actuation piston slidably received in a first bore and configured to be movable between a retracted position and an extended position, a drive plunger operably connected to the actuation piston to move in unison with the actuation piston. The drive plunger is slidably received with a first clearance in a second bore. A pump plunger is slidably received with a second clearance in the second bore and configured to be movable between a retracted position and an extended position. A compensation chamber is arranged in the second bore between a distal side of the drive plunger and a proximal side of the pump plunger, and a pump chamber is arranged in the second bore on a distal side of the pump plunger.

### SUMMARY

It is an object to provide a fuel pump that overcomes or at least reduces the drawbacks problem mentioned above.

The foregoing and other objects are achieved by the features of the independent claims. Further implementation forms are apparent from the dependent claims, the description, and the figures.

According to a first aspect, there is provided a fuel valve according to claim 1

The inventors arrived at the insight that it would be ideal if the pressure at which the sealing liquid is supplied to the clearance follows the fluctuating pressure of the fuel in the pump chamber so that the pressure of the sealing liquid can be selected to be identical or marginally higher than the fuel pressure at all times. Simply adding a system that supplies the sealing liquid at a pressure that follows the fluctuations of the pressure of the fuel would render the fuel pump significantly more complicated and expensive. However, the inventors realized that it would be possible to create such a system without rendering the fuel pump complicated by arranging two plungers in series that move in tandem in a single bore, with a sealing liquid chamber arranged between the two plungers. Thus, one of the plungers acts as a drive plunger that pushes the other pump plunger without direct contact between the two plungers, and the pressure in the sealing liquid chamber forcing the pump plunger to follow the movement of the drive plunger.

When the pressure in the pump chamber increases, the pressure in the sealing liquid chamber will increase accordingly. Thus, the clearance around the pump plunger will experience the same pressure at both its axial ends. The proximal axial end will experience the pressure in the sealing liquid chamber and the distal axial end will experience the pressure in the pump chamber.

Preferably, the sealing liquid is supplied to the pump at a pressure that is slightly higher than the pressure at which the fuel is supplied to the pump. Thus, it is ensured that over time the general direction of the flow through the clearance around the pump plunger is from the sealing liquid chamber to the pump chamber, thereby ensuring that fuel will never reach the proximal side of the pump plunger. By selecting the margin between the supply pressure of the sealing liquid and the fuel correctly, the magnitude of this flow can be adjusted so that the required safety margin can be kept without driving unnecessary much sealing liquid into the pump chamber.

In a possible implementation form of the first aspect, the fuel pump comprises a sealing liquid port for connection to a source of pressurized sealing liquid, a sealing liquid supply channel fluidically connecting the sealing liquid chamber to the sealing liquid supply port.

In a possible implementation form of the first aspect the sealing liquid supply channel opens to the sealing liquid chamber at a position close to the distal end of the drive plunger when the actuation piston is in its retracted position.

In a possible implementation form of the first aspect, the drive plunger disconnects the sealing liquid channel from the sealing liquid chamber when the actuation piston is in any position between its retracted position and its extended position.

In a possible implementation form of the first aspect, the fuel pump comprises a sealing liquid return channel, the sealing liquid return channel connecting to a sealing liquid return port, and the sealing liquid return channel opening to the second clearance for any position of the pump plunger between its retracted position and its extended position.

In a possible implementation form of the first aspect, the fuel pump comprises a resilient element disposed between the proximal side of the pump plunger and the distal side of the drive plunger.

In a possible implementation form of the first aspect, the fuel pump comprises a mechanical end stop that limits the maximum distance between the distal end of the drive plunger and the proximal end of the pump plunger.

In a possible implementation form of the first aspect, the fuel pump comprises a fuel inlet port and a fuel supply channel connecting the fuel inlet port to the pump chamber. Preferably, a first one-way valve being arranged in the fuel supply channel, the first one-way valve allowing flow from the fuel inlet port to the pump chamber, and the first one-way valve preventing flow from the pump chamber to the fuel inlet port.

In a possible implementation form of the first aspect, the fuel pump comprises a fuel outlet channel connecting to the fuel chamber. Preferably, the fuel outlet channel comprises a second one-way valve that prevents flow through the outlet channel towards the pump chamber.

In a possible implementation form of the first aspect, the second bore is aligned with the first bore.

In a possible implementation form of the first aspect the sealing liquid port is connected to a source of sealing liquid at a first pressure, wherein the pump chamber is connected to a source of pressurized fuel at a second pressure, and wherein the sealing liquid outlet port is connected to sealing liquid circulation circuit at a third pressure, the first pressure being higher than the second pressure and the second pressure preferably being higher than the third pressure.

In a possible implementation form of the first aspect, the drive plunger and the pump plunger are arranged in series in the second bore, so that the drive plunger and the pump plunger move in tandem in the second bore, with the sealing liquid chamber arranged between the drive plunger and the pump plunger.

In a possible implementation form of the first aspect, the fuel pump comprises pump plunger executes a pump stroke when it moves from its retracted position to its extended position and wherein the pump plunger executes an aspiration stroke when it moves from its extended position to its retracted position.

In a possible implementation form of the first aspect, the drive plunger pushes the pump plunger during a pump stroke without direct contact between the drive plunger and the pump plunger, and wherein the pressure in the sealing liquid chamber causes the pump plunger to follow the movement of the drive plunger.

In a possible implementation form of the first aspect the fuel pump is connected to a source of sealing liquid at a first pressure and to a source of fuel at a second pressure, and wherein the first pressure is higher than the second pressure.

In a possible implementation form of the first aspect, an actuation chamber is arranged in the first bore on the proximal side of the actuation piston.

In a possible implementation form of the first aspect, the diameter of the second bore is larger than the diameter of the first bore, thus rendering the fuel pump into a pressure booster.

Preferably, the sealing liquid is a sealing oil.

According to a possible implementation of the first aspect, the fuel valve comprises a nozzle and valve needle that controls the flow from the pump chamber to the nozzle.

According to a possible implementation of the first aspect, the valve needle cooperates with a valve seat in the fuel valve, the valve needle allowing flow from the pump chamber to the nozzle when the valve needle has lift from the valve seat, and wherein lift of the valve needle is controlled by a control signal and preferably not by the pressure of the fuel.

According to a second aspect, there is provided a large two-stroke uniflow scavenged turbocharged internal combustion engine with crossheads, the engine comprising comprising a fuel valve according to the first aspect or any possible implementations thereof.

These and other aspects will be apparent from the embodiments described below.

### BRIEF DESCRIPTION OF THE DRAWINGS

In the following detailed portion of the present disclosure, the aspects, embodiments, and implementations will be explained in more detail with reference to the example embodiments shown in the drawings, in which:
Fig. 1 is an elevated front view of a large two-stroke diesel engine according to an example embodiment.
Fig. 2 is an elevated side view of the large two-stroke engine of Fig. 1.
Fig. 3 is a diagrammatic representation of the large two-stroke engine according to Fig. 1.
Fig 4 is a diagrammatic representation of an embodiment of a fuel valve for use in the engine of Figs. 1 and 2, showing the sources of liquid connected to the fuel valve.
Fig. 5 is an elevated view of a fuel valve according to an embodiment and comprising a fuel pump according to an embodiment, and
Figs. 6 to 8 are sectional views of the fuel valve of Fig. 5, illustrating a fuel pump and a pressure booster according to an embodiment.

### DETAILED DESCRIPTION

In the following detailed description, a fuel pump, a pressure booster, a fuel valve, and an internal combustion engine in which such fuel pumps, such pressure boosters, and such fuel valves are described with reference to a large two-stroke low-speed uniflow turbocharged compression-ignited internal combustion engine with crossheads in the example embodiments.

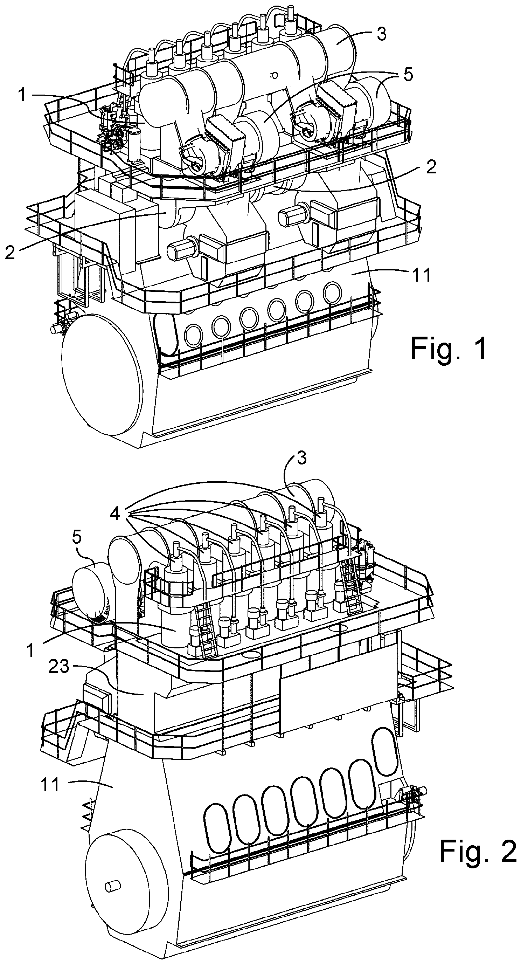

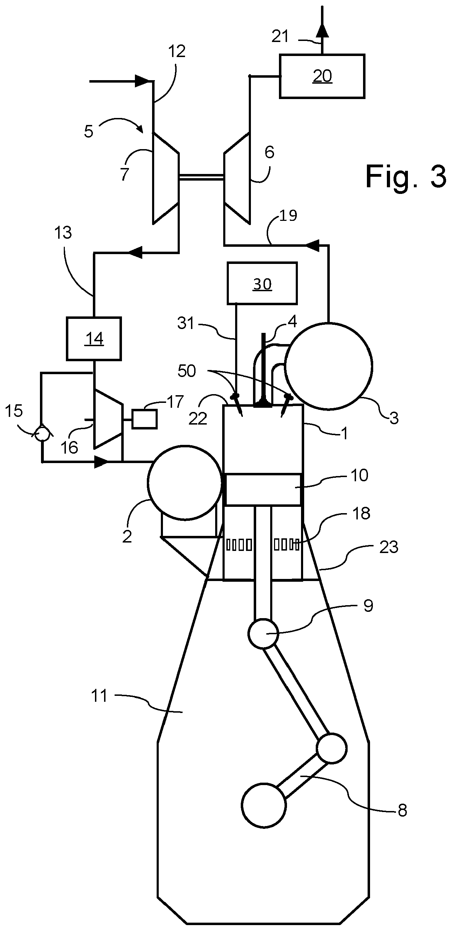

Figs. 1, 2, and 3 show a large low-speed turbocharged two-stroke low-speed diesel engine with a crankshaft 8 and crossheads 9. Fig. 3 shows a diagrammatic representation of a large low-speed turbocharged two-stroke diesel engine with its intake and exhaust systems. In this example embodiment, the engine has six cylinders in line. Large low-speed turbocharged two-stroke diesel engines have typically between four and fourteen cylinders in line, carried by a cylinder frame 23 that is carried by an engine frame 11. The engine may e.g. be used as the main engine in a marine vessel or as a stationary engine for operating a generator in a power station. The total output of the engine may, for example, range from 1,000 to 110,000 kW.

The engine is in this example embodiment a compression-ignited engine of the two-stroke uniflow type with scavenge ports 18 at the lower region of the cylinder liners 1 and a central exhaust valve 4 at the top of the cylinder liners 1. The scavenge air is passed from the scavenge air receiver 2 to the scavenge ports 18 of the individual cylinders 1. A piston 10 in the cylinder liner 1 compresses the scavenge air. Fuel is injected through fuel valves 50 in the cylinder cover 22. Combustion follows, and exhaust gas is generated. The fuel valves 50 are suitable for injecting a slow igniting liquid fuel into the combustion chamber. An example of a fuel is Liquid Petroleum Gas (LPG). Other examples of liquid fuels are methanol, ethanol, petrol, DME, or NH3.

These fuels typically have a low flashpoint, which means that any leakage of such fuel to the outside of the pump or into other systems, such as e.g. control oil system, the lubrication oil system, or the cooling system must be avoided.

The fuel is preferably delivered to the fuel valves in liquid form and injected from the nozzle holes of the fuel valve into the combustion chamber. The fuel is supplied to the fuel valves at a fuel supply pressure for example 50 bar.

In an embodiment, the engine is additionally provided with a fuel supply system (not shown) for supplying a conventional fuel, including dedicated fuel valves for injecting the conventional fuel (such as e.g. fuel oil, marine diesel, or heavy fuel oil) into the combustion chamber.

When an exhaust valve 4 is opened, the exhaust gas flows through an exhaust duct associated with the cylinders 1 into the exhaust gas receiver 3 and onwards through a first exhaust conduit 19 to a turbine 6 of the turbocharger 5, from which the exhaust gas flows away through a second exhaust conduit via an economizer 20 to an outlet 21 and into the atmosphere. Through a shaft, the turbine 6 drives a compressor 7 supplied with fresh air via an air inlet 12. The compressor 7 delivers pressurized scavenge air to a scavenge air conduit 13 leading to the scavenge air receiver 2. The scavenge air in the scavenge air conduit 13 passes an intercooler 14 for cooling the scavenge air.

The cooled scavenge air passes via an auxiliary blower 16 driven by an electric motor 17 that pressurizes the scavenge air flow when the compressor 7 of the turbocharger 5 does not deliver sufficient pressure for the scavenge air receiver 2, i.e. in low or partial load conditions of the engine. At higher engine loads the turbocharger compressor 7 delivers sufficient compressed scavenge air and then the auxiliary blower 16 is bypassed via a non-return valve 15.

The engine is operated in at least one operation mode with an alternative fuel such as e.g. LPG, ethanol, petrol, DME, or NH3, and supplied by a fuel supply system 30 in liquid form at a substantially stable pressure and temperature. However, depending on the details of the fuel supply system 30 and the type of fuel supplied, slight variations in temperature and pressure are unavoidable. Further, slight variations in the composition of the fuel can also occur. In an embodiment, the engine is a dual-fuel engine and is also provided with a conventional fuel supply system (not shown) for supplying a conventional fuel, such as e.g. fuel oil or heavy fuel oil.

The fuel supply system 30 supplies the fuel injection valves 50 with fuel at relatively low supply pressure (e.g. between approximately 8 to approximately 100 bar pressure) via a supply conduit 31.

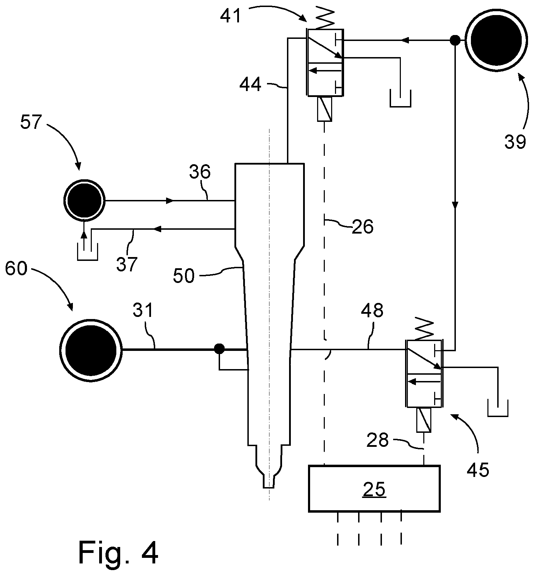

Fig. 4 is a diagrammatic representation of a fuel valve 50 with its connections to a source of pressurized fuel 60, to a source of pressurized sealing liquid 57, to a source of pressurized actuation liquid (e.g. control oil) 39 via a first electronically controlled control valve 41, and via a second electronically controlled control valve 45.

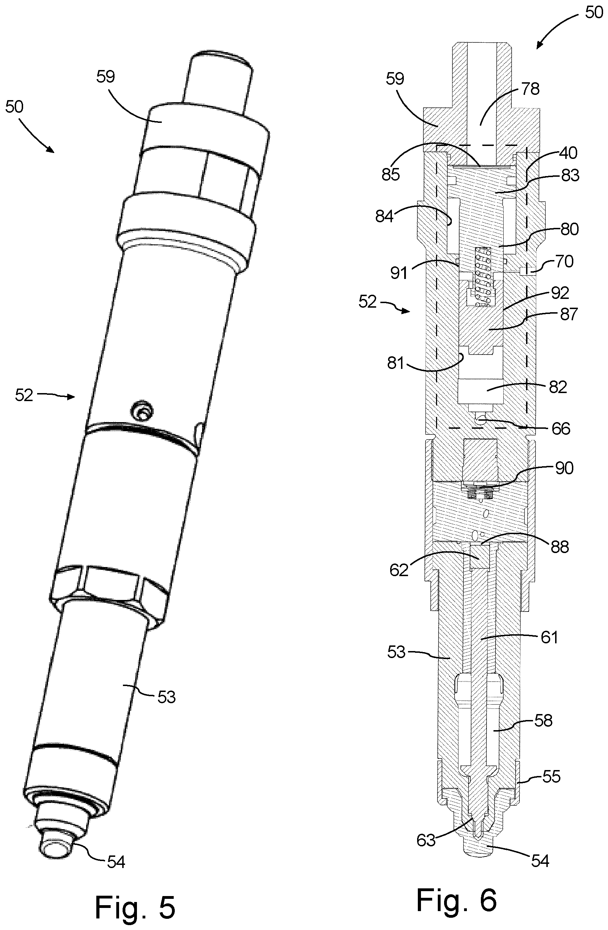

A fuel supply conduit 31 leads from the source of pressurized fuel 60 to a fuel inlet port in the housing of the fuel valve 50. The second electronically controlled valve 45 controls the fuel injection events. The fuel valves 50 comprise a fuel pump 40 that can simultaneously act as a pressure booster (shown in Figs. 5 to 8) for pressurizing the fuel to the injection pressure. The fuel pump 40 is hydraulically actuated under control of a first control valve 41.

As shown in Figs. 5 to 8 the fuel valves 50 comprise an elongated valve housing 52 that includes distal portion 53 and a proximal portion 59. A nozzle 54 is releasably attached to the distal end of the elongated valve housing 52 so that it can be easily replaced if the nozzle 54 should fail or be worn out. The nozzle 54 is provided with a plurality of nozzle holes (not shown) for creating jets of fuel into the combustion chamber.

The proximal portion 59 comprises an actuation fluid inlet port 78 that connects to an actuation chamber 85. The proximal portion 59 protrudes from the cylinder cover 22 when the fuel valve 50 is mounted in the cylinder cover 22. In the present embodiment, the fuel valves 50 are placed in the cylinder cover 22 around the central exhaust valve 4, i.e. relatively close to the wall of the cylinder liner 1. The elongated valve housing 52 and the other components of the fuel injection valve 50, as well as the nozzle 54, are in an embodiment made of steel, such as e.g. tool steel or stainless steel.

The nozzle 54 is connected to the distal end of the valve housing 52 with a union nut 55 securing and surrounding a portion of the nozzle body, and partially surrounding a distal portion 53 of the elongated valve housing 52. The distal portion 53 is provided with an axial bore in which an axially movable valve needle 61 is slidably received with a small clearance. The axial bore has a diameter that is substantially larger than the diameter of the valve needle 61 in the portion of the axial bore closest to a valve seat 63 to form a fuel cavity 58 surrounding the valve needle 61. The fuel cavity 58 also serves as a spring chamber for a helical spring (not shown) that is arranged in the fuel cavity 58 and the helical spring is configured to bias the valve needle towards the valve seat 63.

The portion of the axial bore in the nozzle body most distant from the tip of the nozzle 54 has an enlarged diameter matching the diameter of a needle actuation piston 62. A pressure surface of the needle actuation piston 62 faces a needle actuation chamber 88.

The needle actuation chamber 88 is fluidically connected via a control oil channel (not shown) and a control oil port (not shown) to the control oil conduit 44. Thus, soon as the second electronically controlled control valve 45 connects the control conduit 44 to tank the pressure in the needle actuation chamber 88 will be depressurized and the valve needle 61 will get lift from the valve seat 63 by the force created by fuel pressure in the fuel cavity 58 acting on the valve needle 61 overcoming the bias of the helical spring. Thus, the valve needle 61 is resiliently biased towards its closed position by the pre-tensioned helical wire spring. In the closed position of the valve needle 61, the preferably conical, tip of the valve needle 61 abuts with a preferably conical valve seat 63 in the tip of distal portion 53 and substantially closes the fluidic connection between the fuel cavity 58 and the nozzle 54. A fluidic connection between the fuel cavity 58 and the nozzle 54 is established when the valve needle 61 has lift from the valve seat 63, i.e. when the valve needle 61 is forced towards the proximate end of the fuel valve 50 against the bias of the helical wire spring. The valve needle 61 is lifted when the needle actuation chamber 88 is depressurized and the pressure of the fuel in the fuel cavity 58 acting on the valve needle 61 overcomes the bias of the helical wire spring 68. Hereto, the diameter of the valve needle 61 at the valve seat 63 is lesser than the diameter of the valve needle 61 where it is received in the axial bore.

The valve needle 61 returns to the valve seat when the needle actuation chamber 88 is pressurized by the second electronically controlled control valve 45 connecting the control signal conduit 48 to the source of pressurized control 39.

The fuel pump/pressure booster 40 comprises a larger diameter actuation piston 83 connected to a smaller diameter drive plunger 80 to move in unison therewith. Thus, the drive plunger 80 is operably connected to the actuation piston 83 to move in unison with the actuation piston 83. In the shown embodiment, the actuation piston 83 and the drive plunger 80 are formed as one integral piece, but it should be understood that the drive plunger 80 merely needs to be operably connected, for example by a rod, to the actuation piston 83 so that the actuation piston 83 and the drive plunger 80 move in unison.

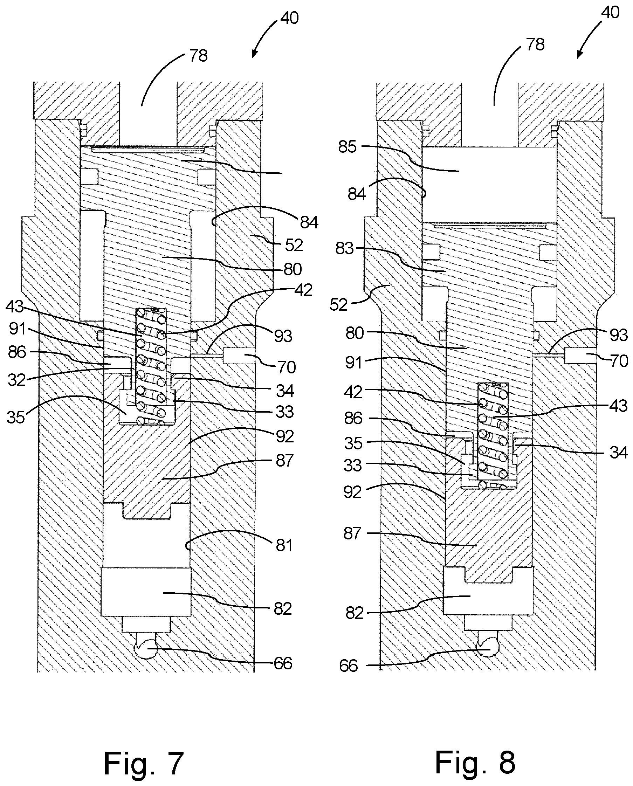

The actuation plunger 83 has a retracted position shown in Figs. 6 and 7 and an extended position shown in Fig. 8. Since the drive plunger 80 moves in unison with the actuation piston 83, the drive plunger 80 has a corresponding retracted and extended position.

The actuation piston 83 is slidably received in a first bore 84 in the pump/fuel valve housing 52. The drive plunger 80 is slidably received with a first clearance 91 in a second bore 81 that is arranged in the pump/fuel valve housing 52.

On its proximal side, the actuation piston 83 faces the actuation chamber 84 that can be connected to the pressurized source of actuation liquid 39 or with tank under control of the first control valve 41.

The distal side of the drive plunger 80 faces a sealing liquid chamber 86 that is connected to a sealing liquid inlet port 70 via a sealing liquid supply channel 93. The sealing liquid inlet port is connected to the source of pressurized sealing liquid 57 via the sealing liquid supply line 36.

A pump plunger 87 is slidably received with a second clearance 92 in the second bore 81. The pump plunger 87 is movable between a retracted position and an extended position. The sealing liquid chamber 86 is arranged in the second bore 81 between the distal side of the drive plunger 80 and a proximal side of the pump plunger 87.

A pump chamber 82 is arranged in the second bore 81 on a distal side of the pump plunger 87.

Thus, the drive plunger 80 and the pump plunger 87 are arranged in series in the second bore 81, so that the drive plunger 80 and the pump plunger 87 move in tandem in the second bore 81, with the sealing liquid chamber 86 arranged between the drive plunger 80 and the pump plunger 87.

The pump plunger 87 executes a pump stroke when it moves from its retracted position to its extended position and the pump plunger 87 executes an aspiration stroke when it moves from its extended position to its retracted position.

The drive plunger 80 pushes the pump plunger 87 during a pump stroke without direct contact between the drive plunger 80 and the pump plunger 87. The pressure in the sealing liquid chamber 86 causes the pump plunger 87 to follow the movement of the drive plunger 80.

A sealing liquid supply channel 93 in the pump/valve housing 52 fluidically connects the sealing liquid chamber 86 to the sealing liquid supply port 70 when the actuation piston 83 is in its retracted position. The sealing liquid supply channel 93 opens to the sealing liquid chamber 86 at a position close to the distal end of the drive plunger 80 when the actuation piston 83 and drive plunger 80 are in their retracted position.

The drive plunger 80 disconnects the sealing liquid supply channel 93 from the sealing liquid chamber 86 when the drive plunger 80 is in any position between its retracted position and its extended position, i.e. the sealing liquid chamber 86 is only connected to the sealing supply channel 93 when the drive plunger 80 is in its retracted position (shown in Figs. 6 and 7). When this happens, the sealing liquid supply channel 93 opens instead to the first clearance 91.

In an embodiment, a resilient element, preferably a helical spring 42, is disposed between the proximal side of the pump plunger 87 and the distal side of said drive plunger 80. The resilient element is an additional assurance that the sealing liquid chamber 86 returns to its full volume after a pump stroke (the primary assurance for the sealing liquid chamber 86 to return to its full volume after a pump stroke is the pressure of the sealing liquid supplied to the liquid chamber through the sealing liquid supply channel 93 when the drive plunger 80 is in its retracted position).

In an embodiment, a mechanical end stop is provided that limits the maximum distance between the distal end of the drive plunger 80 and the proximal end of the pump plunger 87. The mechanical end stop comprises an eccentric protrusion 32 that protrudes from the distal end of drive plunger 80. The eccentric protrusion 32 protrudes into a recess 35 in the proximal side of the pump plunger 87. The eccentric protrusion 32 is at its tip provided with an outwardly directed flange 33. The opening of the recess 35 is provided with an inwardly directed flange 34. The outwardly directed flange 33 abuts with the inwardly directed flange 34 to form an end stop that ensures that the distance between the distal end of the drive plunger 80 and the proximal end of the pump plunger 87 does not exceed a given maximum. Due to the protrusion 32 being eccentric, and stop can be disengaged by rotation of the drive plunger 80 relative to the pump plunger 87, e.g. in connection with assembly or disassembly of the fuel pump 40.

The sealing liquid port 70 is connected to the source of sealing liquid 57 at a first pressure. The pump chamber 82 is connected to a source of pressurized fuel 60 at a second pressure, and a sealing liquid outlet port is connected to the sealing liquid return line 37 at a third pressure. Preferably, the first pressure is higher than the second pressure and the second pressure is preferably higher than the third pressure. In an example the first pressure is approximately 80 bar, the second pressure is approximately 50 bar and the third pressure is approximately 42 bar. However, it is understood that the first pressure can be between 15 and 200 bar, the second pressure can be between 10 and 100 bar and the third pressure can be between 5 and 95 bar.

The pump chamber 82 is connected to the fuel supply conduit 31 via a first one-way valve (not shown) in housing 52 and to a high-pressure fuel supply line (not shown) in housing 52 for delivery of high-pressure fuel to the fuel cavity 58. A second one-way valve 90 in the housing 52 prevents the backflow of fuel from the fuel cavity 58 to the pump chamber 82.

The supply pressure of the fuel in the supply conduit 31 is sufficient to cause the pump plunger 87 to complete an aspiration stroke when the actuation chamber 85 is connected to tank. During its aspiration stroke, the pump plunger 87 drives the drive plunger 80, and with it the actuation piston 83 back to their retracted position. In an embodiment, a position sensor (not shown) senses the position of the actuation piston 83 (or of the drive plunger 80) and communicates the position of the actuation piston 83/drive plunger 80 to the electronic control unit 25.

The first electronically controlled control valve 41 is connected to the actuation chamber 85 in the fuel valve 50 via an actuation conduit 44, to a source of high-pressure hydraulic fluid, and to tank. The first electronically controlled control valve 41 is connected to an electronic control unit 25 via a first signal cable 26.

When it is time to pressurize the fuel in the pump chamber, the electronic control unit 25 issues a command signal to the first electronically controlled control valve 41 to connect the actuation chamber 85 to the source of pressurized control oil 39. At this time, the actuation piston 83 is in its retracted position as shown in Figs. 6 and 7. The drive plunger 80 and the plunger 87 will also be in their respective retracted positions as shown in Figs. 6 and 7. The pump chamber 81 will be at its maximum size and be filled with fuel and the sealing liquid chamber 86 will be at its maximum size and filled with sealing liquid.

Upon pressurization of the actuation chamber 85 the pressure in the actuation chamber 85 acting on the actuation piston 83 drives the actuation piston 83 and the drive plunger 80 towards their extended position. The sealing liquid in the sealing liquid chamber 86 is essentially trapped in the sealing liquid chamber 86 (it can only escape through the first and second clearance 91, 92 which pose a significant restriction to flow), and thus, the movement of the drive plunger 80 pressurizes the sealing liquid chamber 86, which in turn drives the pump plunger 87 towards its extended position, thereby making a pump stroke. The movement of the pump plunger 87 towards its extended position will reduce the volume of the pump chamber 82 and thereby pressurize the fuel in the pump chamber 82 and pump the fuel in the pump chamber to the pump chamber outlet 66.

As soon as the drive plunger 80 has made a small movement from its retracted position towards its extended position, the connection between the sealing liquid chamber 86 and the sealing liquid supply channel 93 is interrupted. Thus, the sealing liquid in the sealing liquid chamber 86 is essentially trapped and can only escape the sealing liquid chamber through the first clearance 91 and the second clearance 92.

Since there are no substantial mechanical forces acting on the pump plunger 87, except for minor viscous resistance forces created by the viscous resistance of the liquid (sealing liquid mostly, fuel to a lesser extent) in the first clearance 92 between the pump plunger 87 and second bore 81, the pressure in the sealing liquid chamber 86 will be essentially identical to the pressure in the pump chamber 82.

Thus, the pressure of the sealing liquid in the sealing liquid chamber 86 will inherently follow any changes of the pressure of the fuel in the pump chamber 82, thereby ensuring that the pressure of the sealing liquid that enters the second clearance 92 from the sealing liquid chamber 86 is always equal to the pressure of the fuel that enters the second clearance 92 from the pump chamber 82.

During the pump stroke, a small amount of sealing liquid will enter the first clearance 91 and the second clearance 92, and thus the volume of the sealing liquid chamber 86 will slightly reduce during a pump stroke, as shown in Fig. 8.

When the pump stroke ends, and the drive plunger 80 and the pump plunger 87 are approximately in the position as shown in Fig. 8, the second electronically controlled control valve 45 connects the actuation chamber 85 to tank and thereby ensures that there is a low pressure in the actuation chamber 85 (e.g. approximately 4 to 18 bar).

The pressure of the fuel in the pump chamber 82 is equal to the pressure at which the fuel is supplied to the pump chamber 82 and this pressure is sufficient to cause the pump plunger 87 to perform an aspiration stroke from its extended position to its retracted position. The aspiration stroke of the pump plunger 87 causes the drive plunger 80 to move from its extended position to its retracted position, together with the actuation piston 83, due to the sealing liquid being trapped in the sealing liquid chamber 86. After the drive plunger 87 has returned to its retracted position the sealing liquid chamber 86 is reconnected with the sealing liquid supply channel 93 and the sealing liquid chamber 86 is refilled to its maximum volume (further expansion of the sealing liquid chamber 86 is prevented by the mechanical end stop). Thus, the drive plunger 80 and the pump plunger 87 are returned to their retracted position as shown in Figs. 6 and 7, and the fuel pump 40 is ready for another pump cycle.

In an embodiment, each cylinder is provided with two or three fuel valves 50, arranged in the cylinder cover 22 around the centrally arranged exhaust valve 4.

As shown in Fig. 4, each fuel valve 50 is connected to a supply of pressurized sealing liquid 57 via a sealing liquid supply line 36 and with a sealing liquid return line 37. The flow sealing liquid through the fuel valve 50 is in an embodiment relatively large so that the sealing liquid also acts as a cooling medium for the fuel valve 50.

Each fuel valve 50 is connected to a fuel valve actuation signal conduit 48. The pressure in the fuel valve actuation signal conduit 48 is controlled by a second electronically controlled control valve 45. The second hydraulically controlled valve 45 is preferably a proportional valve and is configured to connect the actuation signal conduit 48 to a source of high-pressure hydraulic fluid 39 or to tank. Since the second hydraulically controlled valve 45 is in an embodiment a proportional valve it is capable of assuming any intermediate position between connection to the source of high-pressure hydraulic fluid 39 and tank. The second electronically controlled control valve 45 is connected to the electronic control unit 25 via a second signal cable 28. The electronic control unit 25 is informed of the position of the second electronically controlled control valve 45.

The first hydraulically controlled valve 41 is preferably a proportional valve and is configured to connect an actuation conduit 44 to the source of high-pressure hydraulic fluid 39 or to tank. Since the first hydraulic control valve, 41 is a proportional valve that is capable of modulating the pressure in the actuation conduit 44 that is delivered to the pressure booster 40 and thus, it is possible to modulate the effect of the fuel pump/pressure booster 40.

The electronic control unit 25 is in receipt of signals from various sensors via signal cables that are illustrated in Fig. 4 as interrupted lines. The signals from the various sensors include e.g. scavenging pressure, peach combustion chamber pressure temperature, exhaust pressure, temperature, crank angle, and speed, although it is noted that this list is not exhaustive and will depend on the construction of the engine, for example, whether it includes exhaust gas recirculation or not, whether it includes a turbocharger or not, etc. The electronic control unit 25 controls the fuel injection valves 50 i.e. the electronic control unit determines when the fuel valve 50 needs to open (start of the fuel injection event) and determines the duration of the open time (duration of the fuel injection event). The electronic control unit 25 also controls the operation of the fuel pump/pressure booster 40, i.e. in the timing of the pressurization of the pressure booster 40 and the duration of the pressurization of the fuel pump/pressure booster 40. In an embodiment, the electronic control unit 25 also controls the level to which the actuation chamber 85 of the fuel pump/pressure booster 40 is pressurized.

The timing of the fuel injection highly affects the combustion pressure in the large two-stroke turbocharged diesel engine (compression-ignited engine). The timing of the opening of the fuel valves 50 relative to the crankshaft angle or relative to the engine cycle largely determines the combustion pressure and the torque delivered by the engine. The duration of the opening of the fuel valves 50 determines the amount of fuel admitted to the cylinders 1, with increasing duration leading to an increasing amount of fuel being admitted to the cylinders 1 per engine revolution.

The electronic control unit 25 is configured to control the timing of the opening of the fuel valves 50 by an electronic signal to the second electronically controlled control valve 45 via the second signal cable 28. Upon receipt of the signal the electronic control valve 45 changes position and connects the actuation signal conduit 48 to the source of high-pressure hydraulic fluid. The high pressure in the actuation signal conduit 48 opens the fuel valve 50, i.e. moves the valve needle 61 to a lifted position.

In an embodiment, the fuel pump/pressure booster 40 and the fuel valve 50 are separate physical units (not shown). In another embodiment, the fuel pump/pressure booster 40 is an integral part of the fuel valve 50. An embodiment of a fuel valve 50 with an integrated fuel pump/pressure booster 40 is shown in Figs. 5 to 8.

In the shown embodiments the fuel pump 40 is an integral part of the fuel valve 50. However, it is understood that the fuel pump is in an embodiment (not shown) an entity that is separate from the fuel valve, with the fuel pump having its own housing and ports.

In the shown embodiments, the first bore 84 and the actuation piston 83 have a diameter that is larger than the diameter of the second bore 81, the drive plunger 80, and the pump plunger 87. This turns the fuel pump into a pressure booster/intensifier. However, in an embodiment (not shown) the first bore and the actuation piston 83 have a diameter that is equal to the diameter of the second bore 81, the drive plunger 80, and the pump plunger 87. In this case, the first and second bore 84, 81 can be one and the same bore in the housing of the fuel pump and the fuel pump is a fuel pump and not a pressure booster.

The various aspects and implementations have been described in conjunction with various embodiments herein. However, other variations to the disclosed embodiments can be understood and effected by those skilled in the art in practicing the claimed subject-matter, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage.

The reference signs used in the claims shall not be construed as limiting the scope. Unless otherwise indicated, the drawings are intended to be read (e.g., cross-hatching, arrangement of parts, proportion, degree, etc.) together with the specification, and are to be considered a portion of the entire written description of this disclosure. As used in the description, the terms "horizontal", "vertical", "left", "right", "up" and "down", as well as adjectival and adverbial derivatives thereof (e.g., "horizontally", "rightwardly", "upwardly", etc.), simply refer to the orientation of the illustrated structure as the particular drawing figure faces the reader. Similarly, the terms "inwardly" and "outwardly" generally refer to the orientation of a surface relative to its axis of elongation, or axis of rotation, as appropriate.

## Claims

1. A fuel valve (50) comprising a fuel pump (40) said fuel pump (40) being arranged in a housing (52) of said fuel valve (50), said fuel pump (40) comprising:
a hydraulically driven actuation piston (83) slidably received in a first bore (84) in said housing (52) and configured to be movable between a retracted position and an extended position,
a drive plunger (80) operably connected to said actuation piston (83) to move in unison with said actuation piston (83), said drive plunger (80) being slidably received with a first clearance (91) in a second bore (81) in said housing (52), a pump plunger (87) slidably received with a second clearance (92) in said second bore (81) and configured to be movable between a retracted position and an extended position,
a sealing liquid chamber (86) arranged in said second bore (81) between a distal side of said drive plunger (80) and a proximal side of said pump plunger (87), and
a pump chamber (82) in said second bore (81) on a distal side of said pump plunger (87).

2. The fuel valve (50) according to claim 1, comprising a sealing liquid port (70) for connection to a source of pressurized sealing liquid (57), a sealing liquid supply channel (93) fluidically connecting said sealing liquid chamber (86) to said sealing liquid supply port (70) when said actuation piston (83) in its retracted position.

3. The fuel valve (50) according to claim 2, wherein said sealing liquid supply channel (93) opens to said sealing liquid chamber (86) at a position close to the distal end of said drive plunger (80) when the actuation piston (83) is in its retracted position.

4. The fuel valve (50) according to claim 3, wherein said drive plunger (80) disconnects said sealing liquid channel (93) from said sealing liquid chamber (86) when said actuation piston (83) is in any position between its retracted position and its extended position.

5. The fuel valve (50) according to any one of claims 1 to 4, wherein a resilient element, preferably a helical spring (42), is disposed between the proximal side of said pump plunger (87) and the distal side of said drive plunger (80).

6. The fuel valve (50) according to any one of claims 1 to 5, wherein a mechanical end stop is provided that limits the maximum distance between the distal end of the drive plunger (80) and the proximal end of the pump plunger (87).

7. The fuel valve (50) according to any one of claims 1 to 6, comprising a fuel inlet port and a fuel supply channel connecting said fuel inlet port to said pump chamber (82), preferably, a first one-way valve being arranged in said fuel supply channel, said first one-way valve allowing flow from said fuel inlet port to said pump chamber (82) and said first one-way valve preventing flow from said pump chamber 82) to said fuel inlet port.

8. The fuel valve (50) according to any one of claims 1 to 7, comprising a fuel outlet channel (66) connecting to said fuel chamber (82).

9. The fuel valve (50) according to any one of claims 1 to 8, wherein said second bore (81) is aligned with said first bore (84).

10. The fuel valve (50) according to any one of claims 7 to 9, wherein said sealing liquid port (70) is connected to a source of sealing liquid (57) at a first pressure, wherein said pump chamber (82) is connected to a source of pressurized fuel (60) at a second pressure.

11. The fuel valve (50) according to any one of claims 1 to 10, wherein said drive plunger (80) and said pump plunger (87) are arranged in series in said second bore (81), so that said drive plunger (80) and said pump plunger (87) are arranged to move in tandem said second bore (81), with said sealing liquid chamber (86) arranged between said drive plunger (80) and said pump plunger (87).

12. The fuel valve (50) according to any one of claims 1 to 11, wherein said pump plunger (87) is configured to execute a pump stroke when it moves from its retracted position to its extended position and wherein said pump plunger (87) is configured to execute an aspiration stroke when it moves from its extended position to its retracted position.

13. The fuel valve (50) according to claim 12, wherein the drive plunger (80) is configured to push the pump plunger (87) during a pump stroke without direct contact between the drive plunger (80) and the pump plunger (87), and wherein the pressure in the sealing liquid chamber (86) is configured to cause the pump plunger (87) to follow the movement of the drive plunger (80).

14. The fuel valve (50) according to any one of claims 1 to 12, wherein said fuel pump (40) is connected to a source of sealing liquid (57) at a first pressure and to a source of fuel (60) at a second pressure, and wherein said first pressure is higher than said second pressure.

15. The fuel valve (50) according to any one of claims 1 to 14, wherein an actuation chamber (85) is arranged in said first bore (84) on the proximal side of said actuation piston (83).

16. A fuel valve (50) according to any one of claims 1 to 15, comprising a nozzle (54) and valve needle (61) that controls the flow from said pump chamber (82) to said nozzle (54).

17. A fuel valve (50) according to claim 16, wherein said valve needle (61) cooperates with a valve seat (63) in said fuel valve (50), said valve needle (61) allowing flow from said pump chamber (82) to said nozzle (54) when said valve needle (61) has lift from said valve seat (63), said valve needle (61) not allowing flow from said pump chamber (82) to said nozzle (54) when said valve needle (61) rests on said valve seat (63) and wherein lift of said valve needle (61) is controlled by a control signal and preferably not by the pressure of the fuel.

18. A large two-stroke uniflow scavenged turbocharged internal combustion engine with crossheads (9), said engine comprising a fuel valve (50) according to any one of claims 1 to 17.

## Patentansprüche

1. Kraftstoffventil (50), das welches eine Kraftstoffpumpe (40) umfasst, wobei die Kraftstoffpumpe (40) in einem Gehäuse (52) des Kraftstoffventils (50) angeordnet ist, wobei die Kraftstoffpumpe (40) umfasst:
einen hydraulisch angetriebenen Betätigungskolben (83), der verschiebbar in einer ersten Bohrung (84) des Gehäuses (52) aufgenommen ist und dafür ausgelegt ist, zwischen einer eingefahrenen Position und einer ausgefahrenen Position beweglich zu sein,
einen Antriebsstößel (80), der mit dem Betätigungskolben (83) betriebsmäßig verbunden ist, um sich gemeinsam mit dem Betätigungskolben (83) zu bewegen,
wobei der Antriebsstößel (80) verschiebbar mit einem ersten Spiel (91) in einer zweiten Bohrung (81) im Gehäuse (52) aufgenommen ist,
einen Pumpenkolben (87), der verschiebbar mit einem zweiten Spiel (92) in der zweiten Bohrung (81) aufgenommen ist und dafür ausgelegt ist, zwischen einer eingefahrenen Position und einer ausgefahrenen Position beweglich zu sein,
eine Sperrflüssigkeitskammer (86), die in der zweiten Bohrung (81) zwischen einer distalen Seite des Antriebsstößels (80) und einer proximalen Seite des Pumpenstößels (87) angeordnet ist, und
eine Pumpenkammer (82) in der zweiten Bohrung (81) auf einer distalen Seite des Pumpenstößels (87).

2. Kraftstoffventil (50) nach Anspruch 1, umfassend einen Sperrflüssigkeitsanschluss (70) zur Verbindung mit einer Quelle von unter Druck stehender Sperrflüssigkeit (57), einen Sperrflüssigkeits-Zuführkanal (93), der die Sperrflüssigkeitskammer (86) fluidtechnisch mit dem Sperrflüssigkeitszufuhranschluss (70) verbindet, wenn der Betätigungskolben (83) in seiner eingefahrenen Position ist.

3. Kraftstoffventil (50) nach Anspruch 2, wobei der Sperrflüssigkeits-Zuführkanal (93) an einer Position nahe dem distalen Ende des Antriebsstößels (80) zur Sperrflüssigkeitskammer (86) mündet, wenn der Betätigungskolben (83) in seiner eingefahrenen Position ist.

4. Kraftstoffventil (50) nach Anspruch 3, wobei der Antriebsstößel (80) den Sperrflüssigkeits-Zuführkanal (93) von der Sperrflüssigkeitskammer (86) trennt, wenn der Betätigungskolben (83) in einer beliebigen Position zwischen seiner eingefahrenen und seiner ausgefahrenen Position ist.

5. Kraftstoffventil (50) nach einem der Ansprüche 1 bis 4, wobei ein elastisches Element, vorzugsweise eine Schraubenfeder (42), zwischen der proximalen Seite des Pumpenstößels (87) und der distalen Seite des Antriebsstößels (80) angeordnet ist.

6. Kraftstoffventil (50) nach einem der Ansprüche 1 bis 5, wobei ein mechanischer Endanschlag vorgesehen ist, der den Maximalabstand zwischen dem distalen Ende des Antriebsstößels (80) und dem proximalen Ende des Pumpenstößels (87) begrenzt.

7. Kraftstoffventil (50) nach einem der Ansprüche 1 bis 6, umfassend einen Kraftstoffeinlass und einen Kraftstoff-Zuführkanal, der den Kraftstoffeinlass vorzugsweise mit der Sperrflüssigkeitskammer (82) verbindet, ein erstes Einwegventil, das im Kraftstoff-Zuführkanal angeordnet ist, wobei das erste Einwegventil Strömung vom Kraftstoffeinlass zur Pumpenkammer (82) zulässt und das erste Einwegventil Strömung von der Pumpenkammer (82) zum Kraftstoffeinlass verhindert.

8. Kraftstoffventil (50) nach einem der Ansprüche 1 bis 7, umfassend einen Kraftstoffauslasskanal (66), der zur Kraftstoffkammer (82) verbindet.

9. Kraftstoffventil (50) nach einem der Ansprüche 1 bis 8, wobei die zweite Bohrung (81) an der ersten Bohrung (84) ausgerichtet ist.

10. Kraftstoffventil (50) nach einem der Ansprüche 7 bis 9, wobei der Sperrflüssigkeitsanschluss (70) mit einer Quelle von Sperrflüssigkeit (57) auf einem ersten Druck verbunden ist, wobei die Pumpenkammer (82) mit einer Quelle von unter Druck stehendem Kraftstoff (60) auf einem zweiten Druck verbunden ist.

11. Kraftstoffventil (50) nach einem der Ansprüche 1 bis 10, wobei der Antriebsstößel (80) und der Pumpenstößel (87) in Reihe in der zweiten Bohrung (81) angeordnet sind, sodass der Antriebsstößel (80) und der Pumpenststößel (87) zur Bewegung im Tandem in der zweiten Bohrung (81) angeordnet sind, wobei die Sperrflüssigkeitskammer (6) zwischen dem Antriebsstößel (80) und dem Pumpenstößel (87) angeordnet ist.

12. Kraftstoffventil (50) nach einem der Ansprüche 1 bis 11, wobei der Pumpenstößel (87) zum Ausführen eines Pumphubs ausgelegt ist, wenn er sich aus seiner eingefahrenen Position in seine ausgefahrene Position bewegt, und wobei der Pumpenstößel (87) zum Ausführen eines Ansaughubs ausgelegt ist, wenn er sich aus seiner ausgefahrenen Position in seine eingefahrene Position bewegt.

13. Kraftstoffventil (50) nach Anspruch 12, wobei der Antriebsstößel (80) zum Schieben des Pumpenstößels (87) während eines Pumphubs ohne direkten Kontakt zwischen dem Antriebsstößel (80) und dem Pumpenstößel (87) ausgelegt ist, und wobei der Druck in der Sperrflüssigkeitskammer (86) zum Bewirken ausgelegt ist, dass der Pumpenstößel (87) der Bewegung des Antriebsstößels (80) folgt.

14. Kraftstoffventil (50) nach einem der Ansprüche 1 bis 12, wobei die Kraftstoffpumpe (40) mit einer Quelle von Sperrflüssigkeit (57) auf einem ersten Druck und einer Quelle von Kraftstoff (60) auf einem zweiten Druck verbunden ist, und wobei der erste Druck höher als der zweite Druck ist.

15. Kraftstoffventil (50) nach einem der Ansprüche 1 bis 14, wobei eine Betätigungskammer (85) in der ersten Bohrung (84) auf der proximalen Seite des Betätigungskolbens (83) angeordnet ist.

16. Kraftstoffventil (50) nach einem der Ansprüche 1 bis 15, umfassend eine Düse (54) und Ventilnadel (61), die die Strömung von der Pumpenkammer (82) zur Düse (54) steuert.

17. Kraftstoffventil (50) nach Anspruch 16, wobei die Ventilnadel (61) mit einem Ventilsitz (63) im Kraftstoffventil (50) zusammenwirkt, wobei die Ventilnadel (61) Strömung von der Pumpenkammer (82) zur Düse (54) zulässt, wenn sie Anhub vom Ventilsitz (63) hat, wobei die Ventilnadel (61) Strömung von der Pumpenkammer (82) zur Düse (54) nicht zulässt, wenn die Ventilnadel (61) auf dem Ventilsitz (63) ruht, und wobei Anhub der Ventilnadel (61) durch ein Steuersignal gesteuert wird und vorzugsweise nicht durch den Druck des Kraftstoffs.

18. Große gleichstromgespülte turboaufgeladene Zweitakt-Brennkraftmaschine mit Turbolader mit Kreuzköpfen (9), wobei die Kraftmaschine ein Kraftstoffventil (50) nach einem der Ansprüche 1 bis 17 umfasst.

## Revendications

1. Soupape de carburant (50) comprenant une pompe à carburant (40), ladite pompe à carburant (40) étant disposée dans un boîtier (52) de ladite soupape de carburant (50), ladite pompe à carburant (40) comprenant :
un piston d'actionnement (83) entraîné de façon hydraulique, reçu de façon coulissante dans un premier alésage (84) dans ledit boîtier (52) et configuré pour être déplaçable entre une position rétractée et une position déployée,
un plongeur d'entraînement (80) fonctionnellement relié audit piston d'actionnement (83) pour se déplacer à l'unisson avec ledit piston d'actionnement (83), ledit plongeur d'entraînement (80) étant reçu de façon coulissante avec un premier jeu (91) dans un deuxième alésage (81) dans ledit boîtier (52),
un plongeur de pompe (87) reçu de façon coulissante avec un deuxième jeu (92) dans ledit deuxième alésage (81) et configuré pour être déplaçable entre une position rétractée et une position déployée,
une chambre de liquide d'étanchéité (86) disposée dans ledit deuxième alésage (81) entre un côté distal dudit plongeur d'entraînement (80) et un côté proximal dudit plongeur de pompe (87), et
une chambre de pompe (82) dans ledit deuxième alésage (81) sur un côté distal dudit plongeur de pompe (87).

2. Soupape de carburant (50) selon la revendication 1, comprenant un orifice de liquide d'étanchéité (70) pour le raccordement à une source de liquide d'étanchéité sous pression (57), un canal d'alimentation en liquide d'étanchéité (93) reliant fluidiquement ladite chambre de liquide d'étanchéité (86) audit orifice d'alimentation en liquide d'étanchéité (70) lorsque ledit piston d'actionnement (83) est dans sa position rétractée.

3. Soupape de carburant (50) selon la revendication 2, dans laquelle ledit canal d'alimentation en liquide d'étanchéité (93) débouche sur ladite chambre de liquide d'étanchéité (86) à une position proche de l'extrémité distale dudit plongeur d'entraînement (80) lorsque le piston d'actionnement (83) est dans sa position rétractée.

4. Soupape de carburant (50) selon la revendication 3, dans laquelle ledit plongeur d'entraînement (80) déconnecte ledit canal de liquide d'étanchéité (93) de ladite chambre de liquide d'étanchéité (86) lorsque ledit piston d'actionnement (83) est dans n'importe quelle position entre sa position rétractée et sa position déployée.

5. Soupape de carburant (50) selon l'une quelconque des revendications 1 à 4, dans laquelle un élément élastique, de préférence un ressort hélicoïdal (42), est disposé entre le côté proximal dudit plongeur de pompe (87) et le côté distal dudit plongeur d'entraînement (80).

6. Soupape de carburant (50) selon l'une quelconque des revendications 1 à 5, dans laquelle il est prévu une butée d'arrêt mécanique limitant la distance maximale entre l'extrémité distale du plongeur d'entraînement (80) et l'extrémité proximale du plongeur de pompe (87).

7. Soupape de carburant (50) selon l'une quelconque des revendications 1 à 6, comprenant un orifice d'entrée de carburant et un canal d'alimentation en carburant raccordant ledit orifice d'entrée de carburant à ladite chambre de pompe (82), de préférence, un premier clapet antiretour étant disposé dans ledit canal d'alimentation en carburant, ledit premier clapet antiretour permettant un écoulement à partir dudit orifice d'entrée de carburant vers ladite chambre de pompe (82) et ledit clapet antiretour empêchant un écoulement à partir de ladite chambre de pompe (82) vers ledit orifice d'entrée de carburant.

8. Soupape de carburant (50) selon l'une quelconque des revendications 1 à 7, comprenant un canal de sortie de carburant (66) raccordé à ladite chambre de pompe (82).

9. Soupape de carburant (50) selon l'une quelconque des revendications 1 à 8, dans laquelle ledit deuxième alésage (81) est aligné avec ledit premier alésage (84).

10. Soupape de carburant (50) selon l'une quelconque des revendications 7 à 9, dans laquelle ledit orifice de liquide d'étanchéité (70) est raccordé à une source de liquide d'étanchéité (57) à une première pression, dans laquelle ladite chambre de pompe (82) est raccordée à une source de carburant sous pression (60) à une deuxième pression.

11. Soupape de carburant (50) selon l'une quelconque des revendications 1 à 10, dans laquelle ledit plongeur d'entraînement (80) et ledit plongeur de pompe (87) sont disposés en série dans ledit deuxième alésage (81), de telle façon que ledit plongeur d'entraînement (80) et ledit plongeur de pompe (87) sont disposés de manière à se déplacer en tandem dans ledit deuxième alésage (81), avec ladite chambre de liquide d'étanchéité (86) disposée entre ledit plongeur d'entraînement (80) et ledit plongeur de pompe (87).

12. Soupape de carburant (50) selon l'une quelconque des revendications 1 à 11, dans laquelle ledit plongeur de pompe (87) est configuré pour exécuter une course de pompe lorsqu'il se déplace de sa position rétractée vers sa position déployée et dans laquelle ledit plongeur de pompe (87) est configuré pour exécuter une course d'aspiration lorsqu'il se déplace de sa position déployée vers sa position rétractée.

13. Soupape de carburant (50) selon la revendication 12, dans laquelle le plongeur d'entraînement (80) est configuré pour pousser le plongeur de pompe (87) pendant une course de pompe sans contact direct entre le plongeur d'entraînement (80) et le plongeur de pompe (87), et dans laquelle la pression dans la chambre de liquide d'étanchéité (86) est configurée pour amener le plongeur de pompe (87) à suivre le mouvement du plongeur d'entraînement (80).

14. Soupape de carburant (50) selon l'une quelconque des revendications 1 à 12, dans laquelle ladite pompe à carburant (40) est raccordée à une source de liquide d'étanchéité (57) à une première pression et à une source de carburant (60) à une deuxième pression, et dans laquelle ladite première pression est supérieure à ladite deuxième pression.

15. Soupape de carburant (50) selon l'une quelconque des revendications 1 à 14, dans laquelle une chambre d'actionnement (85) est disposée dans ledit premier alésage (84) sur le côté proximal dudit piston d'actionnement (83).

16. Soupape de carburant (50) selon l'une quelconque des revendications 1 à 15, comprenant une buse (54) et un pointeau de soupape (61) commandant l'écoulement de ladite chambre de pompe (82) vers ladite buse (54).

17. Soupape de carburant (50) selon la revendication 16, dans laquelle ledit pointeau de soupape (61) coopère avec un siège de soupape (63) dans ladite soupape de carburant (50), ledit pointeau de soupape (61) permettant un écoulement de ladite chambre de pompe (82) vers ladite buse (54) lorsque ledit pointeau de soupape (61) s'est soulevé par rapport audit siège de soupape (63), ledit pointeau de soupape (61) ne permettant pas d'écoulement de ladite chambre de pompe (82) vers ladite buse (54) lorsque ledit pointeau de soupape (61) repose sur ledit siège de soupape (63) et dans laquelle un soulèvement dudit pointeau de soupape (61) est commandé par un signal de commande et de préférence pas par la pression du carburant.

18. Moteur à combustion interne turbocompressé à balayage uniflux à deux temps avec des traverses (9), ledit moteur comprenant une soupape de carburant (50) selon l'une quelconque des revendications 1 à 17.
